(19) Europäisches Patentamt
European Patent Office
Office européen des brevets

(11) **EP 3 270 267 B1**

(12) **EUROPEAN PATENT SPECIFICATION**

(45) Date of publication and mention
of the grant of the patent:
**03.06.2020 Bulletin 2020/23**

(51) Int Cl.:
***G06F 3/0338*** *(2013.01)*   ***G06F 3/0362*** *(2013.01)*
***G05G 9/047*** *(2006.01)*

(21) Application number: **16761577.2**

(22) Date of filing: **01.03.2016**

(86) International application number:
**PCT/JP2016/056242**

(87) International publication number:
**WO 2016/143607 (15.09.2016 Gazette 2016/37)**

(54) **OPERATION INPUT DEVICE**

BEDIENUNGSEINGABEVORRICHTUNG

DISPOSITIF D'ENTRÉE D'ACTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.03.2015 JP 2015045552**

(43) Date of publication of application:
**17.01.2018 Bulletin 2018/03**

(73) Proprietor: **Alps Alpine Co., Ltd.**
**Tokyo**
**145-8501 (JP)**

(72) Inventors:
• **WAKUDA, Hiroshi**
  **Tokyo 145-8501 (JP)**
• **HIRATSUKA, Kazuhiko**
  **Tokyo 145-8501 (JP)**
• **BANNAI, Hiroyuki**
  **Tokyo 145-8501 (JP)**
• **MIYABAYASHI, Taichi**
  **Tokyo 145-8501 (JP)**
• **OGRADY, James**
  **Tokyo 145-8501 (JP)**

(74) Representative: **Schmitt-Nilson Schraud Waibel
Wohlfrom
Patentanwälte Partnerschaft mbB
Pelkovenstraße 143
80992 München (DE)**

(56) References cited:
WO-A1-2015/015736      JP-A- H11 212 725
JP-A- 2001 293 253      JP-A- 2010 015 514
US-A1- 2002 190 727      US-A1- 2010 045 624

## Description

Technical Field

The present invention relates to a manipulation input device that can detect an input manipulation in a rotational direction.

Background Art

In PTL 1 below, a manipulation input device is disclosed; by manipulating a cap member at the top, a cap part is inclined in a direction in which the cap part has received a manipulation and a detecting part disposed in the direction of the inclination detects a change in pressing force due to the inclination of the cap part, so the manipulation input device detects the above manipulation without providing a manipulation feeling to the user.

WO 2015/015736 A1 discloses an operation position detection device equipped with an operation element having an operation surface, a base member, four planar detection elements, each having at one end a connecting part and at the other end a securing part, and having a detection surface between the connecting part and the securing part, a strain detection unit provided on each of the detection surfaces, and an operation position calculation unit.

US 2010/045624 A1 discloses a manipulation input apparatus which includes a panel member, strain gauges, and a controller. The panel member has a front surface functioning as a manipulation input surface to which an input is executed by touch manipulation. The strain gauges detect a load which is applied to the panel member. The controller calculates a position to which a load is applied based on load detection result by the strain gauges. A stick as a convex-shaped structural section is further arranged and integrated in the manipulation input surface of the panel member such that an upward load against the panel member is applied via the stick.

US 2002/190727 A1 discloses a capacitance element electrode and a reference electrode are formed on a substrate so as to be opposite to a displacement electrode. A dome-shaped movable switch electrode is disposed so as to be in contact with the reference electrode and at a distance from a fixed switch electrode formed inside the reference electrode, and to cover the fixed switch electrode.

Citation List

Patent Literature

PTL 1: Japanese Unexamined Patent Application

Publication No. 2013-47871

Summary of Invention

Technical Problem

In the conventional technology, however, although the direction of a manipulation by the user can be detected from the inclination direction of the cap part, there is the problem that it is difficult to detect a rotational direction.

The present invention addresses the above problem with the object of providing a manipulation input device that can detect a manipulation in a rotational direction as well.

Solution to Problem

To achieve the object described above, a manipulation input device according to claim 1 is disclosed.

Preferred embodiments of the present invention are defined in the dependent claims.

Since the first detector and second detector disposed at different positions on the manipulative member detect the displacement of the manipulative member, the displacement being caused when a manipulation force is received, it is possible to identify a position at which the manipulative member has received the manipulation force according to detection results of the first detector and second detector and to the positions of the first detector and second detector on the manipulative member. It is also possible to identify the rotational direction of the manipulative member from the position at which the manipulative member has received the manipulation force.

It is possible to identify the intensity of the manipulation force separately in the first direction parallel to the straight line that mutually connects the first detector and second detector and in the second direction perpendicular to the first direction.

It is possible to decide that the manipulation on the manipulative member is any one of a manipulation to rotate the manipulative member, a manipulation to move the manipulative member in the first direction, and a manipulation to move the manipulative member in the second direction.

Since amplification processing can be easily performed on the capacitance, a manipulation can be detected from a small amount of deviation.

The capacitance formed by the base-side electrodes and lever-side electrode changes depending on the elastic deformation of the lever member, the elastic deformation accompanying the manipulation of the lever member. This change in the capacitance is detected by the capacitance detecting circuit.

Since a small space that allows the elastic deformation of the lever member is sufficient as a space required to manipulate the lever member, the manipulation input device can be made compact.

Since the movable range of the lever member due to its elastic deformation is restricted, if a strong force exceeding a stipulated value is applied, the lever member abuts the inner wall of the through-hole, so excessive deformation of the lever member is prevented. Therefore, it is possible to obtain a manipulation input device that is highly resistant to breakage.

Advantageous Effects of Invention

As described above, according to the present invention, it is possible to provide a manipulation input device that can detect a manipulation in a rotational direction as well without providing a manipulation feeling to the user.

Brief Description of Drawings

[Fig. 1] Fig. 1 is a plan view of a manipulation input device according to an embodiment of the present invention.
[Fig. 2] Fig. 2 is a side view of the manipulation input device according to the embodiment of the present invention.
[Fig. 3] Fig. 3 is a schematic outside view of first and second detectors according to the embodiment of the present invention.
[Fig. 4] Fig. 4 is a cross-sectional view of the first and second detectors according to the embodiment of the present invention.
[Fig. 5] Fig. 5 is a circuit block diagram of a circuit board included in the first and second detectors according to the embodiment of the present invention.
[Fig. 6] Fig. 6 is a drawing illustrating a mechanism by which the manipulation input device according to the embodiment of the present invention detects a rotational manipulation.
[Fig. 7] Fig. 7 is a flowchart that illustrates the operation of a processing unit in the manipulation input device according to the embodiment of the present invention.

Description of Embodiment

An embodiment of the present invention will be described below in detail with reference to the drawings.

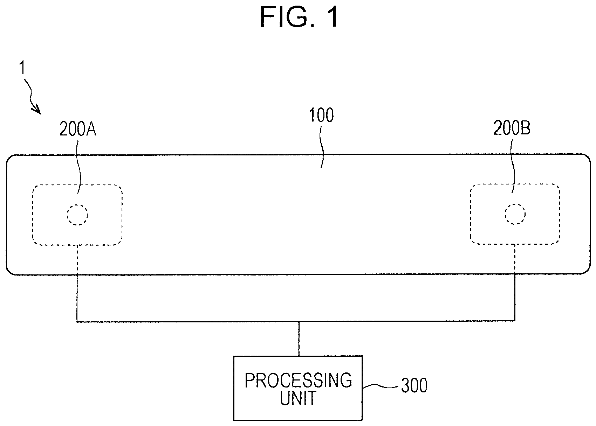

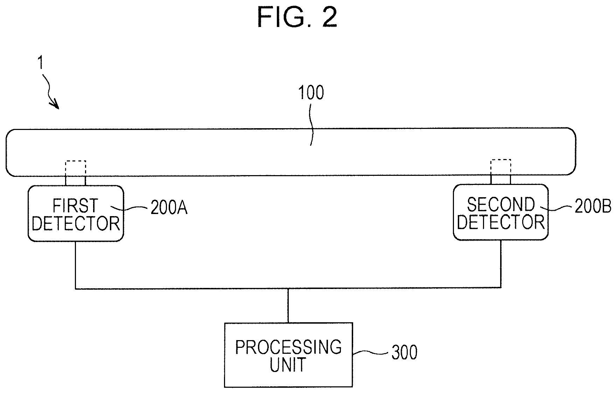

Fig. 1 is a plan view of a manipulation input device 1 according to the embodiment. Fig. 2 is a side view of the manipulation input device 1 according to the embodiment. The manipulation input device 1 has a manipulative member 100, a first detector 200A, a second detector 200B, and a processing unit 300.
The manipulative member 100 has a bar-like shape and accepts a manipulation input by the user. The first detector 200A and second detector 200B are engaged with the manipulative member 100 in the vicinity of both ends of the manipulative member 100.
The first detector 200A and second detector 200B each detect, at their engagement positions, the displacement of the manipulative member 100, the displacement being caused when the manipulative member 100 receives a manipulation force. The processing unit 300 is, for example, a processing circuit such as a CPU (central processing unit), an MPU (micro-processing unit) or the like. The processing unit 300 performs processing to identify a position at which the manipulative member 100 has received a manipulation force, its intensity, its rotational direction, and the like.

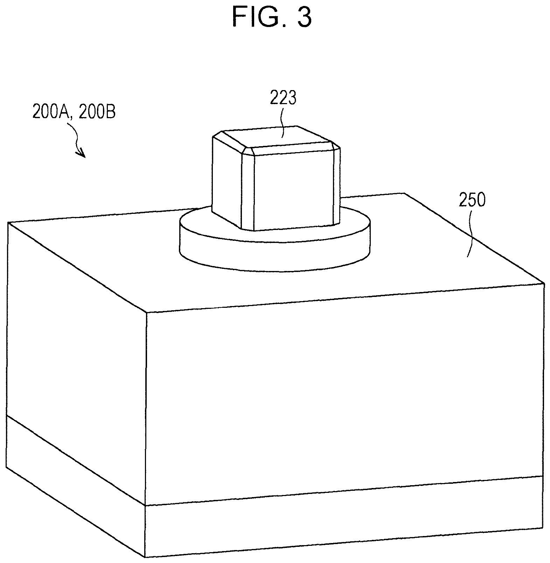

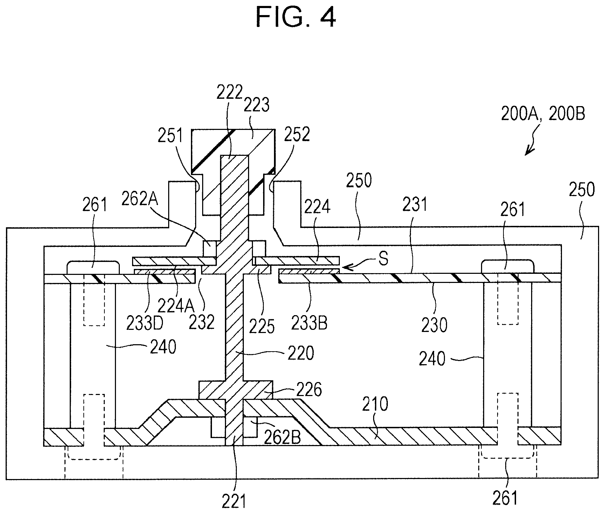

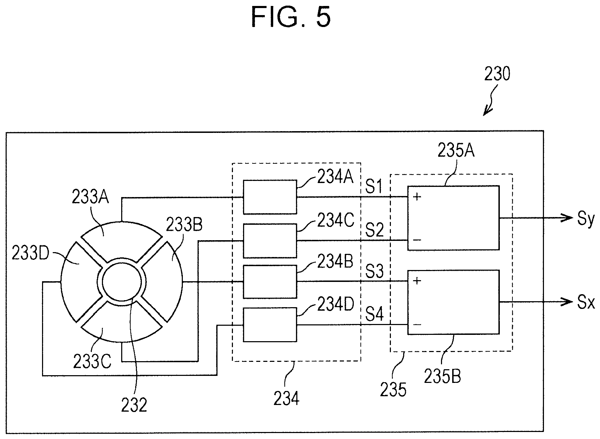

Fig. 3 is a schematic outside view of the first detector 200A and second detector 200B. Fig. 4 is a cross-sectional view of the first detector 200A and second detector 200B. Fig. 5 is a circuit block diagram of a circuit board 230. The structures of the first detector 200A and second detector 200B will be described below with reference to Figs. 3 to 5. The schematic outside view of the first detector 200A and second detector 200B illustrated in Fig. 3 is not limited to the example illustrated in Fig. 3.
One end 221 of a lever member 220 is secured to a base 210 and another end 222 is a free end, which is not secured, in an attitude in which the longitudinal direction of the lever member 220 extends in a direction perpendicular to the plate surface 231 of the circuit board 230. A holding part 223 is provided at the other end 222 of the lever member 220. The user can manipulate the lever member 220 by holding the holding part 223.
The lever member 220 also has a lever-side electrode 224. The lever-side electrode 224 has a circuit board facing surface 224A that faces a plurality of base-side electrodes 233A to 233D, described later, which are formed on the plate surface 231 of the circuit board 230 with a clearance S therebetween. The circuit board facing surface 224A of the lever-side electrode 224 is positioned in parallel to the base-side electrodes 233A to 233D formed on the plate surface 231 of the circuit board 230, and has a circular shape with the lever member 220 positioned at the center.
On the same sides as the one end 221 and other end 222 of the lever member 220, a projecting part 225 and a projecting part 226, which project in a discoid shape in a direction perpendicular to the longitudinal direction of the lever member 220, are integrally formed respectively. The lever-side electrode 224 is mounted on the projecting part 225 and is secured by a nut 262A.
The lever member 220 is secured so that the projecting part 226 and a nut 262B interpose the base 210 therebetween. Although, in this embodiment, the lever-side electrode 224 is a body separated from the lever member 220, the lever-side electrode 224 may be integrally formed as part of the lever member 220.
The circuit board 230 is secured to the base 210 with screws 261 through a plurality of supporting members 240. The circuit board 230 has a through-hole 232, through which the lever member 230 passes. On the circuit board 230, the plurality of base-side electrodes 233A to 233D, a capacitance detecting circuit 234, and an amplifying circuit 235 are provided. The base-side electrodes 233A to 233D are formed at positions at which they face the lever-side electrode 224 on the plate surface 231 of the circuit board 230.

The base-side electrodes 233A and 233C detect the operation of the manipulative lever 220 along the Y axis (up and down direction when viewed toward the drawing sheet in Fig. 4) of the circuit board 230. The base-side electrodes 233B and 233D detect the operation of the manipulative lever 220 along the X axis (right and left direction when viewed toward the drawing sheet in Fig. 4) of the circuit board 230. Incidentally, in Fig. 4, virtual X-Y coordinates with the center of the through-hole 231 in the circuit board 230 set to a zero point are set.

The capacitance detecting circuit 234 detects a capacitance formed by the base-side electrodes 233A to 233D and lever-side electrode 224. Specifically, the capacitance detecting circuit 234 has four charge amplifiers 234A to 234D, which respectively convert charge signals output from the base-side electrodes 233A to 233D to voltage signals and output them.

The amplifying circuit 235 has two differential amplifying circuits 235A and 235B. The differential amplifying circuit 235A takes a difference between an output from the charge amplifier 234A and an output from the charge amplifier 234C and amplifies the difference. The differential amplifying circuit 235B takes a difference between an output from the charge amplifier 234B and an output from the charge amplifier 234D and amplifies the difference. Incidentally, outputs from the amplifying circuit 235, which is provided in each of the first detector 200A and second detector 200B, are input to the processing unit 300.

That is, an amount by which the manipulative lever 220 has been moved in the Y-axis direction (up and down direction when viewed toward the drawing sheet in Fig. 4) is found from the output from the differential amplifying circuit 235A. An amount by which the manipulative lever 220 has been moved in the X-axis direction (right and left direction when viewed toward the drawing sheet in Fig. 4) is found from the output from the differential amplifying circuit 235B.

A cover 250 is secured to the base 210 and has a through-hole 251 through which the lever member 220 passes. The through-hole 251 in the cover 250 restricts the movable range of the lever member 220 due to its elastic deformation. That is, if a strong force exceeding a stipulated value is applied to the lever member 220, the lever member 220 abuts the inner wall 252 of the through-hole 251, so excessive deformation of the lever member 220 is prevented.

The processing unit 300 performs processing to identify a position at which the manipulative member 100 has received a manipulation force, its intensity, its rotational direction, and the like, according to detection results at the first detector 200A and second detector 200B and to the positions of the first detector 200A and second detector 200B on the manipulative member 100.

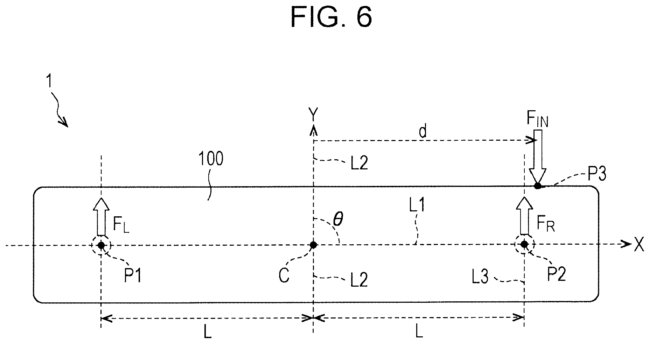

Fig. 6 is a drawing illustrating a mechanism by which the manipulation input device 1 detects a rotational manipulation. The mechanism by which the manipulation input device 1 detects a rotational manipulation will be described below with reference to Fig. 6. Incidentally, in the description below, the engagement positions, in the manipulative member 100, of the first detector 200A and second detector 200B will be respectively denoted P1 and P2, and a position at which a manipulation force was applied by the user will be denoted P3. A virtual straight line mutually connecting the positions P1 and P2 will be denoted L1, and the midpoint on the virtual straight line L1 between the positions P1 and P2 will be denoted C. In addition, a virtual straight line passing the midpoint C and extends in a direction perpendicular to the virtual straight line L1 will be denoted L2, and a distance from the midpoint C to the position P1 and a distance from the midpoint C to the position P2 will be each denoted L.

Here, a case will be considered in which a manipulation force $F_{IN}$ has been input to the position P3, on the manipulative member 100, which is apart from the virtual straight line L2 by a distance d.

Since the manipulative member 100 is secured (does not move) by the first detector 200A and second detector 200B, the manipulation force $F_{IN}$ and reaction forces $F_L$ and $F_R$, which are respectively generated at the first detector 200A and second detector 200B, are in balance.

More specifically, the sum of the components of the manipulation force $F_{IN}$ and the reaction forces $F_L$ and $F_R$ respectively generated at the first detector 200A and second detector 200B must be zero (in a balanced state) for each of horizontality (X axis), perpendicularity (Z axis), and rotation (θ) with respect to the center C.

Therefore, equations (1) to (3) below hold. Equation (1) represents the balance in the parallel direction (X axis). Equation (2) represents the balance in the perpendicular direction (Y axis). Equation (3) represents the balance in the rotational direction (θ).

Equation 1

$$F_X = F_{RX} + F_{LX} \quad \cdots \quad (1)$$

Equation 2

$$F_Y = F_{RY} + F_{LY} \quad \cdots \quad (2)$$

Equation 3

$$F_Y \cdot d = (F_{RY} - F_{LX}) \cdot L \quad \cdots \quad (3)$$

where

$F_X$: X-axis component of the manipulation force $F_{IN}$

$F_Y$: Y-axis component of the manipulation force $F_{IN}$
$F_{LX}$: X-axis component of the reaction force $F_R$ of the first detector 200A
$F_{LY}$: Y-axis component of the reaction force $F_R$ of the first detector 200A
$F_{RX}$: X-axis component of the reaction force $F_R$ of the second detector 200B
$F_{RY}$: Y-axis component of the reaction force $F_R$ of the second detector 200B

Here, the distance L from the midpoint C to the position P1 and from the midpoint C to the position P2 can be measured in advance, the value of d can be obtained from equation (3) above.

Incidentally, although, in the above description, equation (3) has been obtained from equation (1), assuming that the midpoint C on the virtual straight line L1 between the positions P1 and P2 is the reference point (zero point), the reference point (zero point) may not be the midpoint C between the positions P1 and P2, but an offset may be set and the reference point may be at a position deviated from the midpoint C.

Since the first detector 200A and second detector 200B are not disposed at positions deviated in the Y-axis direction, it is not possible to further identify the rotational component of $F_X$. To identify the rotational component of $F_X$ as well, it suffices to provide a detector at a position as well deviated in the Y-axis direction.

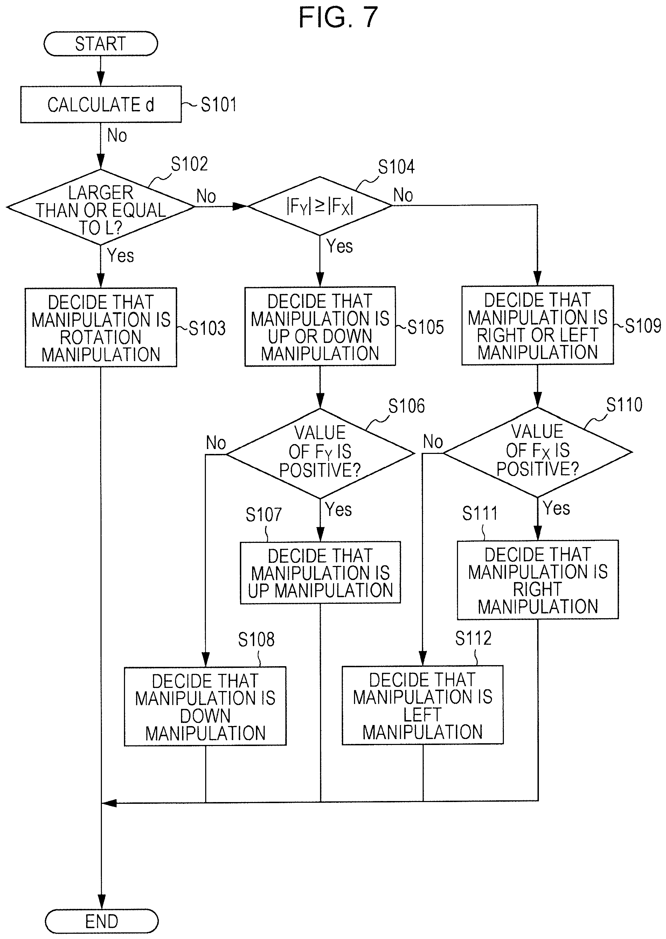

Fig. 7 is a flowchart that illustrates the operation of the processing unit 300 in the manipulation input device 1. The operation of the processing unit 300 in the manipulation input device 1 will be described with reference to Fig. 7. Incidentally, the values of equations (1) to (3) and L are stored in advance in the processing unit 300 or a memory (not illustrated).

In the description below, the first detector 200A and second detector 200B are set so that they output a rightward input and a leftward input in the right and left direction (X axis) in Fig. 6 respectively as a positive (plus) signal and a negative (minus) signal, and also output an upward input and a downward input in the up and down direction (Y axis) in Fig. 6 respectively as a positive (plus) signal and a negative (minus) signal.

First, the processing unit 300 calculates the value of d according to equation (3) above (step S101). The processing unit 300 then decides whether the calculated value of d is larger than or equal to L (step S102).

If the value of d is larger than or equal to L (Yes in step S102), the processing unit 300 decides that the manipulation is to rotate the manipulative member 100 (step S103) .

If the value of d is smaller than L (No in step S102), the processing unit 300 decides whether the absolute value of $F_Y$ is larger than or equal to the absolute value of $F_X$ (step S104).

If the absolute value of $F_Y$ is larger than or equal to the absolute value of $F_X$ (Yes in step S104), the processing unit 300 decides that the manipulation is to move the manipulative member 100 in the up or down direction (Y axis) (step S105) .

Next, the processing unit 300 decides whether the value of $F_Y$ is positive (step S106). If the value of $F_Y$ is positive (Yes in step S106), the processing unit 300 decides that the manipulation is to move the manipulative member 100 upward (step S107).

If the value of $F_Y$ is not positive (the result of step S106 is No), the processing unit 300 decides that the manipulation is to move the manipulative member 100 downward (step S108).

If the absolute value of $F_Y$ is neither larger than nor equal to the absolute value of $F_X$ (the result of step S104 is No), the processing unit 300 decides that the manipulation is to move the manipulative member 100 in the right or left direction (X axis) (step S109).

Next, the processing unit 300 decides whether the value of $F_X$ is positive (step S110). If the value of $F_X$ is positive (Yes in step S110), the processing unit 300 decides that the manipulation is to move the manipulative member 100 rightward (step S111).

If the value of $F_X$ is not positive (No in step S110), the processing unit 300 decides that the manipulation is to move the manipulative member 100 leftward (step S112).

Although, in the above embodiment, the first detector 200A and second detector 200B detect a capacitance that changes depending on the amount of deviation of the manipulative member 100, the amount changing depending on the manipulation force applied by the user, another method, such as, for example, a piezoelectric element, may be used to detect the amount of deviation of the manipulative member 100.

As described above, the manipulation input device 1 in this embodiment has the first detector 200A and second detector 200B that are disposed at different positions on the manipulative member 100 and detect the displacement of the manipulative member 100, the displacement being caused when the manipulative member 100 receives a manipulation force, and also has the processing unit 300 that performs processing to identify a position at which the manipulative member 100 has received the manipulation force according to detection results at the first detector 200A and second detector 200B and to the positions of the first detector 200A and second detector 200B on the manipulative member 100. Thus, it is possible to identify a position at which the manipulative member 100 has received the manipulation force. Then, it is also possible to identify the rotational direction of the manipulative member 100 from the position at which the manipulative member 100 has received the manipulation force.

In this embodiment, the processing unit 300 performs processing to identify the intensity of the manipulation force in a first direction (Y-axis direction) parallel to the virtual straight line L1 that mutually connects the first detector 200A and second detector 200B and in a second direction (X-axis direction) perpendicular to the first direction. Thus, the intensity of the manipulation force can be identified in the X-axis direction and Y-axis direction.

In this embodiment, the first detector 200A and second detector 200B detect a capacitance that changes depending on the amount of deviation of the manipulative member 100, the amount changing depending on the manipulation force. Since amplification processing can be easily performed on the capacitance, a manipulation can be detected from a small amount of deviation.

In this embodiment, the first detector 200A and second detector 200B have the lever member 220, the one end 221 of which is secured to the base 210 and the other end 222 of which is manipulable, the base-side electrodes 233A to 233D secured to the base 210, the lever-side electrode 224 provided on the lever member 220, and the capacitance detecting circuit 234 that detects a capacitance formed by the base-side electrodes 233A to 233D and the lever-side electrode 224.

A capacitance is detected that changes depending on the elastic deformation of the lever member 220, the elastic deformation accompanying the manipulation of the lever member 220. Since a small space that allows the elastic deformation of the lever member 120 is sufficient as a space required to manipulate the lever member 120, the first detector 200A and second detector 200B can be made compact.

In this embodiment, the cover 250 is provided that is secured to the base 210 and has the through-hole 251 through which the lever member 220 passes. The through-hole 251 restricts the movable range of the lever member 220 due to its elastic deformation. Therefore, since the movable range of the lever member 220 due to its elastic deformation is restricted, if a strong force exceeding a stipulated value is applied, the lever member 220 abuts the inner wall 252 of the through-hole 251, so excessive deformation of the lever member 220 is prevented. Accordingly, it is possible to suppress the manipulation input device 1 from being deformed or destructed.

Although in the embodiment described above, a linear member has been taken as an example of the manipulative member 100, a manipulative member in another shape such as, for example, a bent or curved shape may be used.

Although, in the embodiment described above, a case in which two detectors, first detector 200A and second detector 200B, are attached to the manipulative member 100 has been taken as an example, three or more detectors may be attached.

Although, in the embodiment described above, a case in which the processing unit 300 detects a rotational manipulation, up and down manipulations, and right and left manipulations made by the use of the manipulative member 100 as illustrated in Fig. 7 has been taken as an example, part of these manipulations or manipulations other than these manipulations may be detected.

Reference Signs List

| 1 | manipulation input device |
|---|---|
| 100 | manipulative member |
| 200A | first detector |
| 200B | second detector |
| 210 | base |
| 220 | lever member |
| 230 | circuit board |
| 240 | supporting member |
| 250 | cover (cabinet) |
| 300 | processing unit |

**Claims**

1. A manipulation input device (1) comprising:

a first detector (200A) and a second detector (200B) that are disposed at different positions (P1, P2) on a manipulative member (100) and that are configured to detect displacement of the manipulative member (100) in a first direction and in a second direction perpendicular to the first direction and at respective positions of the first and second detectors (200A, 200B), the displacement being caused when the manipulative member (100) receives a manipulation force; and
a processing unit (300) configured to perform processing to identify a position (P3) at which the manipulative member (100) has received the manipulation force according to detection results at the first detector (200A) and the second detector (200B) and to positions of the first detector (200A) and the second detector (200B) on the manipulative member (100),
**characterised in that**
the processing unit (300) is configured to perform processing to identify intensity of the manipulation force in the first direction parallel to a virtual straight line (L1) that mutually connects the first detector (200A) and the second detector (200B) and in the second direction according to the detection results at the first detector (200A) and the second detector (200B) and to positions of the first detector (200A) and the second detector (200B) on the manipulative member (100),
wherein the processing unit (300) is configured to decide that:

if a distance (d) between the identified position (P3) and a reference position (C) is smaller than a predetermined value (L), a manipulation is to rotate the manipulative member (100), wherein the reference position (C) is a midpoint on the virtual straight line (L1) between the positions (P1, P2), and a distance between the reference position (C) and each of the positions (P1, P2) has the predetermined value (L),

if the distance (d) between the identified position (P3) and the reference position (C) is larger than or equal to the predetermined value (L) and the identified intensity of the manipulation force in the first direction is larger than or equal to the identified intensity of the manipulation force in the second direction, the manipulation is to move the manipulative member (100) in the first direction, and

if the distance (d) between the identified position (P3) and the reference position (C) is larger than or equal to the predetermined value (L) and the identified intensity of the manipulation force in the first direction is smaller than the identified intensity of the manipulation force in the second direction, the manipulation is to move the manipulative member (100) in the second direction.

2. The manipulation input device according to Claim 1, wherein the first detector (200A) and the second detector (200B) are configured to detect a capacitance that changes depending on an amount of deviation of the manipulative member (100), the amount changing depending on the manipulation force.

3. The manipulation input device according to Claim 2, wherein:

each of the first detector (200A) and the second detector (200B) has
a lever member (220), one end (221) of which is secured to a base (210) and another end (222) of which is manipulable,
a base-side electrode (233A-233D) secured to the base (210),
a lever-side electrode (224) provided on the lever member (220), and
a capacitance detecting circuit (234) that is configured to detect a capacitance formed by the base-side electrode (233A-233D) and the lever-side electrode (224); and
the capacitance changes depending on the amount of deviation accompanying the manipulation of the lever member (220).

4. The manipulation input device according to Claim 3, wherein a cover (250) is provided that is secured to the base (210) and has a through-hole (251) through which the lever member (220) passes, the through-hole (251) restricting a movable range of the lever member (220) due to elastic deformation of the lever member (220).

**Patentansprüche**

1. Betätigungseingabevorrichtung (1), die Folgendes aufweist:

einen ersten Detektor (200A) und einen zweiten Detektor (200B), die an verschiedenen Positionen (P1, P2) auf einem Betätigungselement (100) an - geordnet sind und dazu ausgebildet sind, eine Verschiebung des Betäti - gungselements (100) in einer ersten Richtung und in einer zu der ersten Richtung rechtwinkligen zweiten Richtung sowie an jeweiligen Positionen des ersten und des zweiten Detektors (200A, 200B) zu erfassen, wobei die Verschiebung verursacht wird, wenn eine Betätigungskraft auf das Betäti - gungselement (100) aufgebracht wird; und
eine Verarbeitungseinheit (300), die dazu ausgebildet ist, eine Verarbeitung zum Identifizieren einer Position (P3), an der das Betätigungselement (100) die Betätigungskraft empfangen hat, in Abhängigkeit von Erfassungsergeb - nissen an dem ersten Detektor (200A) und dem zweiten Detektor (200B) so - wie von Positionen des ersten Detektors (200A) und des zweiten Detektors (200B) auf dem Betätigungselement (100) auszuführen,
**dadurch gekennzeichnet,**
**dass** die Verarbeitungseinheit (300) dazu ausgebildet ist, eine Verarbeitung zum Identifizieren der Intensität der Betätigungskraft in der ersten Richtung parallel zu einer virtuellen geraden Linie (L1), die den ersten Detektor (200A) und den zweiten Detektor (200B) miteinander verbindet, sowie in der zweiten Richtung in Abhängigkeit von den Erfassungsergebnissen an dem ersten Detektor (200A) und dem zweiten Detektor (200B) sowie von Positio - nen des ersten Detektors (200A) und des zweiten Detektors (200B) auf dem Betätigungselement (100) auszuführen,
wobei die Verarbeitungseinheit (300) dazu ausgebildet ist, eine Entschei - dung dahingehend zu treffen:

**dass** dann, wenn eine Distanz (d) zwischen der identifizierten Position (P3) und einer Referenzposition (C) kleiner ist als ein vorbestimmter Wert (L), eine Betätigung eine Rotationsbewegung des Betätigungselements (100) veranlassen soll, wobei es sich bei der Referenzposition (C) um einen Mit - telpunkt auf der virtuellen geraden Linie (L1) zwischen den Positionen (P1, P2) handelt und eine Distanz zwischen der Referenzposition (C) und jeder der Positionen (P1, P2) den vorbestimmten Wert (L) hat, **dass** dann, wenn die Distanz (d) zwischen der identifizierten Position (P3) und der Referenzposition (C) größer als oder gleich dem vorbestimmten Wert (L) ist und die identifizierte Intensität der Betätigungskraft in der ersten Richtung größer als oder gleich der identifizierten Intensität der Betätigungskraft in der zweiten Richtung ist, die Betätigung das Betätigungsele - ment (100) in der ersten Richtung bewegen soll, und **dass** dann, wenn die Distanz (d) zwischen der identifizierten Position (P3) und der Referenzposition (C) größer als oder gleich dem vorbestimmten Wert (L) ist und die identifizierte Intensität der Betätigungskraft in der ersten Richtung kleiner als die identifizierte Intensität der Betätigungskraft in der zweiten Richtung ist, die Betätigung das Betätigungselement (100) in der zweiten Richtung bewegen soll.

2. Betätigungseingabevorrichtung nach Anspruch 1, wobei der erste Detektor (200A) und der zweite Detektor (200B) dazu aus - gebildet sind, eine Kapazität zu erfassen, die sich in Abhängigkeit von ei - nem Betrag der Abweichung des Betätigungselements (100) ändert, wobei sich der Betrag in Abhängigkeit von der Betätigungskraft ändert.

3. Betätigungseingabevorrichtung nach Anspruch 2, wobei der erste Detektor (200A) und der zweite Detektor (200B) jeweils auf - weisen:

   ein Hebelelement (220), dessen eines Ende (221) an einer Basis (210) be - festigt ist und dessen anderes Ende (222) betätigbar ist, eine basisseitige Elektrode (233A-233D), die an der Basis (210) befestigt ist, eine hebelseitige Elektrode (224), die an dem Hebelelement (220) vorgese - hen ist, und eine Kapazitätserfassungsschaltung (234), die zum Erfassen einer Kapazi - tät ausgebildet ist, die von der basisseitigen Elektrode (233A-233D) und der hebelseitigen Elektrode (224) gebildet wird; und wobei sich die Kapazität in Abhängigkeit von dem Betrag der Abweichung ändert, die mit der Betätigung des Hebelelements (220) einhergeht.

4. Betätigungseingabevorrichtung nach Anspruch 3, wobei eine Abdeckung (250) vorhanden ist, die an der Basis (210) befestigt ist und eine Durchgangsöffnung (251) aufweist, durch die sich das Hebel - element (220) erstreckt, wobei die Durchgangsöffnung (251) einen Bewe - gungsbereich des Hebelelements (220) aufgrund elastischer Verformung des Hebelelements (220) einschränkt.

**Revendications**

1. Dispositif d'entrée de manipulation, comprenant :

   un premier détecteur (200A) et un second détecteur (200B), lesquels sont disposés en des positions différentes (P1, P2) sur un élément de manipulation (100), et lesquels sont configurés pour détecter un déplacement de l'élément de manipulation (100) dans une première direction et dans une seconde direction perpendiculaire à la première direction et en des positions respectives des premier et second détecteurs (200A, 200B), le déplacement étant provoqué lorsque l'élément de manipulation (100) reçoit une force de manipulation, et une unité de traitement (300) configurée pour réaliser un traitement afin d'identifier une position (P3) sur laquelle l'élément de manipulation (100) a reçu la force de manipulation conformément aux résultats de détection sur le premier détecteur (200A) et le second détecteur (200B) et à des positions du premier détecteur (200A) et du second détecteur (200B) sur l'élément de manipulation (100), **caractérisé en ce que** l'unité de traitement (300) est configurée pour réaliser un traitement afin d'identifier l'intensité de la force de manipulation dans la première direction parallèlement à une ligne droite virtuelle (L1), laquelle relie le premier détecteur (200A) et le second détecteur (200B) entre eux, et dans la seconde direction conformément aux résultats de détection sur le premier détecteur (200A) et le second détecteur (200B) et à des positions du premier détecteur (200A) et du détecteur (200B) sur l'élément de manipulation (100), dans lequel l'unité de traitement (300) est configurée pour décider que :

   si une distance (d) entre la position identifiée (P3) et une position de référence (C) est inférieure à une valeur prédéterminée (L), une manipulation revient à faire tourner l'élément de manipulation (100) ; dans lequel la position de référence (C) est un point intermédiaire sur la ligne droite virtuelle (L1) entre les positions (P1, P2), et une distance entre la position de référence (C) et chacune des positions (P1, P2) présente la valeur prédéterminée (L) ; si la distance (d) entre la position identifiée (P3) et la position de référence (C) est supérieure ou égale à la valeur prédéterminée (L), et si l'intensité identifiée de la force de manipulation dans la première direction est supérieure ou égale à l'intensité identifiée de la force de manipulation dans la seconde direction, la manipulation revient à déplacer l'élément de manipulation (100) dans la première direction, et

si la distance (d) entre la position identifiée (P3) et la position de référence (C) est supérieure ou égale à la valeur prédéterminée (L), et si l'intensité identifiée de la force de manipulation dans la première direction est inférieure à l'intensité identifiée de la force de manipulation dans la seconde direction, la manipulation revient à déplacer l'élément de manipulation (100) dans la seconde direction.

2. Dispositif d'entrée de manipulation selon la revendication 1, dans lequel le premier détecteur (200A) et le second détecteur (200B) sont configurés pour détecter une capacité, laquelle varie en fonction d'une quantité d'écart de l'élément de manipulation (100), la variation de quantité dépendant de la force de manipulation.

3. Dispositif d'entrée de manipulation selon la revendication 2, dans lequel :

chaque détecteur parmi le premier détecteur (200A) et le second détecteur (200B) présente un élément à levier (220), dont une extrémité (221) est fixée sur une base (210) et dont une autre extrémité (222) est manipulable ;
une électrode côté base (233A-233D) fixée sur la base (210) ;
une électrode côté levier (224) prévue sur l'élément à levier (220), et
un circuit de détection de capacité (234), lequel est configuré pour détecter une capacité formée par l'électrode côté base (233A-233D) et l'électrode côté levier (224), et
les variations de capacité dépendant de la quantité d'écart accompagnant la manipulation de l'élément à levier (220).

4. Dispositif d'entrée de manipulation selon la revendication 3, dans lequel un couvercle (250) est prévu, lequel est fixé sur la base (210) et présente un trou débouchant (251) à travers lequel passe l'élément à levier (220), le trou débouchant (251) restreignant une plage mobile de l'élément à levier (220) suite à une déformation élastique de l'élément à levier (220).

# FIG. 1

# FIG. 2

FIG. 3

FIG. 4

# FIG. 5

# FIG. 6

# FIG. 7

START

CALCULATE d —S101

No

S102

LARGER THAN OR EQUAL TO L? —No→ $|F_Y| \geq |F_X|$ S104 —No

Yes

S104

Yes

DECIDE THAT MANIPULATION IS ROTATION MANIPULATION —S103

DECIDE THAT MANIPULATION IS UP OR DOWN MANIPULATION —S105

DECIDE THAT MANIPULATION IS RIGHT OR LEFT MANIPULATION —S109

S106

No← VALUE OF $F_Y$ IS POSITIVE?

Yes

S110

No← VALUE OF $F_X$ IS POSITIVE?

Yes

S107

DECIDE THAT MANIPULATION IS UP MANIPULATION

S111

DECIDE THAT MANIPULATION IS RIGHT MANIPULATION

S108

DECIDE THAT MANIPULATION IS DOWN MANIPULATION

S112

DECIDE THAT MANIPULATION IS LEFT MANIPULATION

END

**EP 3 270 267 B1**

**REFERENCES CITED IN THE DESCRIPTION**

**Patent documents cited in the description**

- WO 2015015736 A1
- US 2010045624 A1
- US 2002190727 A1
- JP 2013047871 A